# EUROPEAN PATENT APPLICATION

(11) **EP 4 797 307 A1**
(43) Date of publication of application: **26.08.2026**
(21) Application number: 26159499.8
(22) Date of filing: 19.02.2026
(51) Int. Cl.: H01H 47/32

(54) **BACKUP POWER BOX AND DRIVING METHOD THEREOF, AND PHOTOVOLTAIC POWER GENERATION SYSTEM**

(30) Priority: 19.02.2025 CN 202510186813
(71) Applicant: HUAWEI TECHNOLOGIES CO., LTD., Shenzhen 518129 (CN)
(72) Inventor: LI, Zhuang, Shenzhen 518129 (CN); HE, Yuan, Shenzhen 518129 (CN); MENG, Mingxing, Shenzhen 518129 (CN); CHEN, Wei, Shenzhen 518129 (CN); LIU, Guodong, Shenzhen 518129 (CN)
(74) Representative: Gill Jennings & Every LLP

(57) **Abstract**

This application provides a backup power box and a driving method thereof, and a photovoltaic power generation system. A drive circuit of a relay in the backup power box includes: a first switching transistor connected in series between a second auxiliary power supply and one end of a coil of the relay, a second switching transistor connected in series between the other end of the coil of the relay and a grounding circuit, a first auxiliary power supply connected to the other end of the coil of the relay, and a first resistor and a second resistor that are connected in series between the end of the coil of the relay and the grounding circuit. There is a sampling point between the first resistor and the second resistor. A controller turns on the first switching transistor and the second switching transistor in a time-division manner, performs voltage sampling at the sampling point, and determines whether a condition is met, so that before both the first switching transistor and the second switching transistor are controlled to be turned on, that is, the relay is controlled to be closed, a fault in the drive circuit is identified, and whether the drive circuit is abnormal is detected, to improve control reliability of the relay.

## Description

### TECHNICAL FIELD

The present invention relates to the field of power electronics technologies, and in particular, to a backup power box and a driving method thereof, and a photovoltaic power generation system.

### BACKGROUND

With the development of an intelligent photovoltaic power generation system, high-end customer groups gradually adopt a green home power consumption architecture in which photovoltaic power generation is used. The ultimate backup power experience becomes core competitiveness of a scenario-based photovoltaic energy storage solution. Generally, a backup power box in the photovoltaic power generation system uses a contactor to switch between an on-grid mode and an off-grid mode. However, the contactor has inherent defects of a slow switching speed and loud noise, and is criticized by the customers. A relay features a fast switching speed and low noise, and has obvious advantages in the switching between the on-grid mode and the off-grid mode. However, reliability of the relay and fault identification of a drive circuit of the relay present great challenges. If the relay is out of control, for example, the relay is falsely closed, due to a failure of the drive circuit, such as drive interference or individual component malfunction, a device may catch fire or even explode.

### SUMMARY

This application provides a backup power box and a driving method thereof, and a photovoltaic power generation system, to improve control reliability of the relay.

According to a first aspect, this application provides a backup power box, including a first port, a second port, a relay, and a drive circuit. The first port is configured to connect to a power supply. The power supply may be specifically a device that provides an alternating current, for example, a power grid or a generator. The power supply is configured to provide the alternating current for the first port of the backup power box. The second port is configured to connect to an inverter, and the inverter is configured to: convert a direct current provided by a photovoltaic module or an energy storage apparatus into an alternating current, and provide the alternating current for the second port of the backup power box. The relay is connected in series between the first port and the second port. When the relay is closed, the first port is connected to the second port, and a system in which the backup power box is located is in an on-grid mode. When the relay is open, the first port is disconnected from the second port, and the system in which the backup power box is located is in an off-grid mode. The drive circuit includes: a first switching transistor, a second switching transistor, a first auxiliary power supply, a second auxiliary power supply, a first resistor, a second resistor, and a controller. The first switching transistor is connected in series between the second auxiliary power supply and one end of a coil of the relay, and the second switching transistor is connected in series between the other end of the coil of the relay and a grounding circuit. The first switching transistor controls whether the second auxiliary power supply excites the coil of the relay, and the second switching transistor controls whether the coil of the relay is grounded to form a drive loop. When the controller controls both the first switching transistor and the second switching transistor to be turned on, a drive current is formed in the coil of the relay, and the relay is closed. When the controller controls either the first switching transistor or the second switching transistor to be turned off, a drive current cannot be formed in the coil of the relay, and the relay is open. According to dual control logic in which both the first switching transistor and the second switching transistor that are connected in series to the relay are controlled to be turned on, false closing of the relay caused by drive interference or individual component malfunction can be avoided, thereby greatly improving control reliability of the relay. The first auxiliary power supply is connected to the other end of the coil of the relay, the first auxiliary power supply is configured to provide a first voltage, and the second auxiliary power supply is configured to provide a second voltage. The first resistor and the second resistor are connected in series between the end of the coil of the relay and the grounding circuit, and there is a sampling point between the first resistor and the second resistor. In this application, before controlling both the first switching transistor and the second switching transistor to be turned on, the controller may control, according to the following logic, the first switching transistor and the second switching transistor to be turned on in a time-division manner, sample a voltage at the sampling point, and compare whether a sampled voltage meets a condition, to determine whether the drive circuit is abnormal. When the controller controls both the first switching transistor and the second switching transistor to be in an off state, if the sampled voltage is k times the first voltage, and k is greater than 0 and less than 1, it indicates that no fault occurs. When the controller controls the first switching transistor to be in an on state and the second switching transistor to be in the off state, if the sampled voltage is k times the second voltage, it indicates that no fault occurs. When the controller controls the first switching transistor to be in the off state and the second switching transistor to be in the on state, if the sampled voltage is 0, it indicates that no fault occurs. According to the foregoing control logic, the first switching transistor and the second switching transistor are turned on in the time-division manner, and the sampled voltage is determined, so that before the controller controls the relay to be closed, a fault in the drive circuit is identified, and whether the drive circuit is abnormal is detected, to improve control reliability of the relay.

In some embodiments of this application, k=R1/(R1+R2), R1 is a resistance value of the first resistor, and R2 is a resistance value of the second resistor.

In some embodiments of this application, the drive circuit may further include a diode. The diode is connected in series between the first auxiliary power supply and the other end of the coil of the relay. The diode can prevent the second voltage provided by the second auxiliary power supply from backfeeding to the first auxiliary power supply when the first switching transistor is turned on. Specifically, an anode of the diode is connected to the first auxiliary power supply, and a cathode of the diode is connected to the other end of the coil of the relay.

In some embodiments of this application, the first voltage provided by the first auxiliary power supply should be less than the second voltage provided by the second auxiliary power supply, to ensure that during fault identification, voltages that are at the sampling point and that are obtained when the first switching transistor and the second switching transistor are controlled to be turned on in the time-division manner have different voltage values.

In some embodiments of this application, during fault identification, that is, before the controller controls both the first switching transistor and the second switching transistor to be turned on, the first auxiliary power supply may continuously provide the first voltage, and the second auxiliary power supply may continuously provide the second voltage. After the controller controls both the first switching transistor and the second switching transistor to be turned on, to make the relay closed, the first auxiliary power supply may stop providing the first voltage, to reduce power consumption, or the first auxiliary power supply may continuously provide the first voltage.

In some embodiments of this application, to reduce a loss of the coil after the relay is closed, after the controller controls the relay to be stably closed, the second auxiliary power supply may reduce an output voltage, that is, switch from providing the second voltage to providing a third voltage. The third voltage is less than the second voltage and greater than the first voltage. The second auxiliary power supply provides a high voltage for closing contacts of the relay. After the relay is closed, the second auxiliary power supply provides a low voltage for keeping the relay in a closed state, to reduce the loss of the coil of the relay.

According to a second aspect, this application provides a photovoltaic power generation system, including the backup power box provided in the first aspect and an inverter. The second port of the backup power box is connected to the inverter, and the first port of the backup power box is connected to a power supply.

According to a third aspect, this application provides a method for driving a backup power system, including: controlling both a first switching transistor and a second switching transistor to be in an off state, where a voltage at a sampling point is k times a first voltage provided by a first auxiliary power supply, and k is greater than 0 and less than 1; controlling the first switching transistor to be in an on state and the second switching transistor to be in the off state, where the voltage at the sampling point is k times a second voltage provided by a second auxiliary power supply; and controlling the first switching transistor to be in the off state and the second switching transistor to be in the on state, where the voltage at the sampling point is zero. After all the foregoing conditions are met, the first switching transistor and the second switching transistor are controlled to be turned on, to make a relay closed.

In this application, according to the foregoing logic, the first switching transistor and the second switching transistor are turned on in a time-division manner, voltage sampling is performed at the sampling point, and whether a condition is met is determined, so that before the controller controls the relay to be closed, a fault in a drive circuit is identified, and whether the drive circuit is abnormal is detected, to improve control reliability of the relay.

In some embodiments of this application, k=R1/(R1+R2), R1 is a resistance value of a first resistor, and R2 is a resistance value of a second resistor.

In some embodiments of this application, the first voltage provided by the first auxiliary power supply should be less than the second voltage provided by the second auxiliary power supply, to ensure that during fault identification, voltages that are at the sampling point and that are obtained when the first switching transistor and the second switching transistor are controlled to be turned on in the time-division manner have different voltage values.

In some embodiments of this application, during fault identification, that is, before the controller controls both the first switching transistor and the second switching transistor to be turned on, the first auxiliary power supply may continuously provide the first voltage, and the second auxiliary power supply may continuously provide the second voltage. After the controller controls both the first switching transistor and the second switching transistor to be turned on, to make the relay closed, the first auxiliary power supply may stop providing the first voltage, to reduce power consumption, or the first auxiliary power supply may continuously provide the first voltage.

In some embodiments of this application, to reduce a loss of a coil after the relay is closed, after the controller controls the relay to be stably closed, the second auxiliary power supply may reduce an output voltage, that is, switch from providing the second voltage to providing a third voltage. The third voltage is less than the second voltage and greater than the first voltage. The second auxiliary power supply provides a high voltage for closing contacts of the relay. After the relay is closed, the second auxiliary power supply provides a low voltage for keeping the relay in a closed state, to reduce the loss of the coil of the relay.

For details of beneficial effect of the second aspect and the third aspect, refer to the beneficial effect corresponding to the designs in the first aspect. Details are not described herein again.

### BRIEF DESCRIPTION OF DRAWINGS

FIG. 1 is a diagram of a structure of a photovoltaic power generation system according to an embodiment of this application;
FIG. 2 is a diagram of a structure of a drive circuit according to an embodiment of this application;
FIG. 3a is a diagram of a current loop in a drive circuit according to an embodiment of this application;
FIG. 3b is a diagram of another current loop in a drive circuit according to an embodiment of this application;
FIG. 3c is a diagram of another current loop in a drive circuit according to an embodiment of this application;
FIG. 3d is a diagram of another current loop in a drive circuit according to an embodiment of this application; and
FIG. 4 is a time sequence diagram of a drive signal according to an embodiment of this application.

### DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to a person skilled in the art. Identical reference numerals in the accompanying drawings denote identical or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that details are set forth in the following description for ease of fully understanding this application. However, this application can be implemented in a plurality of manners different from those described herein, and a person skilled in the art can perform similar promotion without departing from the connotation of this application. Therefore, this application is not limited to the following disclosed specific implementations. The following descriptions of this specification are example manners of implementing this application. However, the descriptions are intended to describe the general principle of this application, and are not intended to limit the scope of this application. The protection scope of this application shall be defined by the appended claims.

To facilitate understanding of embodiments of this application, the following first describes related technologies in embodiments of this application.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with embodiments. Therefore, statements such as "in an embodiment", "in some embodiments", and "in other embodiments" that appear at different places in this specification do not necessarily mean referring to a same embodiment. Instead, the statements mean referring to "one or more but not all of embodiments", unless otherwise specifically emphasized in another manner. The terms "include", "have", and variants of the terms all mean "include but are not limited to", unless otherwise specifically emphasized in another manner.

Currently, to ensure control reliability of a relay in a backup power box, a plurality of relays are usually disposed in the backup power box and the plurality of relays are connected in series, to avoid a problem of a device fault or a system fault caused by a failure of a single relay or a failure of a drive circuit. However, an increase in a quantity of relays causes an increase in material costs. In addition, after the relays are connected in series, an overall loss of a product is also increased, and a heat dissipation means further needs to be added. Consequently, both a volume and heat dissipation costs of the product are increased.

In view of this, embodiments of this application provide a backup power box and a driving method thereof, and a photovoltaic power generation system, and dual control logic for controlling coil power supply and closing of a relay is implemented in a drive circuit of the relay, to avoid false closing of the relay due to drive interference or individual component malfunction, thereby greatly improving control reliability of the relay. In addition, before the dual control logic, a fault may be identified, and whether the drive circuit is abnormal is detected, to improve the control reliability of the relay.

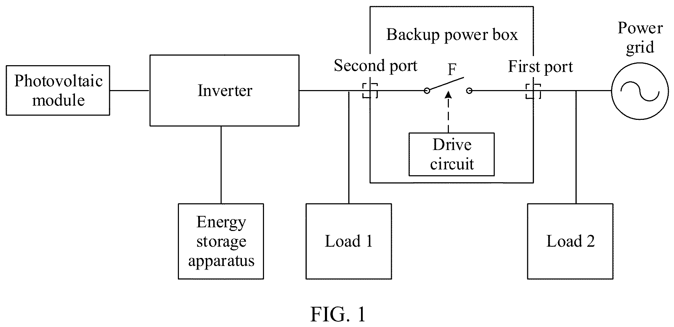

As shown in FIG. 1, a backup power box provided in an embodiment of this application includes a first port, a second port, a relay F, and a drive circuit. The first port is configured to connect to a power supply. The power supply may be specifically a device that provides an alternating current, for example, a power grid or a generator. The power supply is configured to provide the alternating current for the first port of the backup power box. The second port is configured to connect to an inverter, and the inverter is configured to: convert a direct current provided by a photovoltaic module or an energy storage apparatus into an alternating current, and provide the alternating current for the second port of the backup power box. The relay F is connected in series between the first port and the second port. When the relay F is closed, the first port is connected to the second port, and a photovoltaic power generation system in which the backup power box is located is in an on-grid mode. When the relay F is open, the first port is disconnected from the second port, and the photovoltaic power generation system in which the backup power box is located is in an off-grid mode.

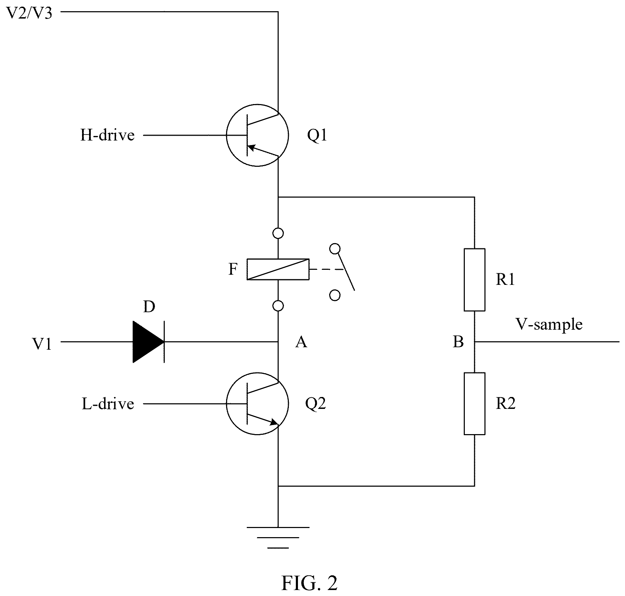

As shown in FIG. 2, the drive circuit includes: a first switching transistor Q1, a second switching transistor Q2, a first auxiliary power supply V1, a second auxiliary power supply V2/V3, a first resistor R1, a second resistor R2, and a controller (not shown in the figure).

In this application, the first switching transistor Q1, the second switching transistor Q2, and the second auxiliary power supply V2/V3 may implement dual control logic for controlling closing of the relay F. Specifically, the first switching transistor Q1 is connected in series between the second auxiliary power supply V2/V3 and one end of a coil of the relay F, and the second switching transistor Q2 is connected in series between the other end A of the coil of the relay F and a grounding circuit. The first switching transistor Q1 controls whether the second auxiliary power supply V2/V3 excites the coil of the relay F. To be specific, when a drive signal H-drive applied by the controller to the first switching transistor Q1 is a turn-on signal, the first switching transistor Q1 is in an on state, and the second auxiliary power supply V2/V3 provides a second voltage V2 for the coil of the relay F. The second switching transistor Q2 controls whether the coil of the relay F is grounded to form a drive loop. To be specific, when a drive signal L-drive applied by the controller to the second switching transistor Q2 is a turn-on signal, the second switching transistor Q2 is in the on state, and the coil of the relay F is grounded. When the controller controls both the first switching transistor Q1 and the second switching transistor Q2 to be turned on, a drive current is formed in the coil of the relay F, so that contacts of the relay F are closed, that is, the relay F is closed, and a line in which the relay F is located is conducted. In other words, the first port and the second port of the backup power box are connected. When the controller controls either the first switching transistor Q1 or the second switching transistor Q2 to be turned off, a drive current cannot be formed in the coil of the relay F, and the relay F is open. According to dual control logic in which both the first switching transistor Q1 and the second switching transistor Q2 that are connected in series to the relay F are controlled to be turned on, false closing of the relay caused by drive interference or individual component malfunction can be avoided, thereby greatly improving control reliability of the relay.

In this application, the switching transistor included in the drive circuit may be specifically a metal-oxide-semiconductor field-effect transistor (metal-oxide-semiconductor field-effect transistor, MOSFET), an insulated gate bipolar transistor (insulated gate bipolar transistor, IGBT), a gallium nitride (gallium nitride, GaN) high electron mobility transistor (high electron mobility transistor, HEMT), a bipolar junction transistor (bipolar junction transistor, BJT), or the like. In some embodiments of this application, the first switching transistor Q1 may be specifically a PNP-type transistor, and the second switching transistor Q2 may be specifically an NPN-type transistor.

In some embodiments of this application, to reduce a loss of a coil after the relay F is closed, after the controller controls the relay F to be stably closed, the second auxiliary power supply V2/V3 may reduce an output voltage, that is, switch from providing a second voltage V2 to providing a third voltage V3. The third voltage V3 is less than the second voltage V2 and greater than a first voltage V1. In other words, the second auxiliary power supply V2/V3 provides a high voltage for closing contacts of the relay F, and after the relay F is closed, the second auxiliary power supply V2/V3 provides a low voltage for keeping the relay F in a closed state, to reduce the loss of the coil of the relay.

In this application, the first resistor R1, the second resistor R2, and the first auxiliary power supply V1, in combination with control logic of turning on the first switching transistor Q1 or the second switching transistor Q2 in a time-division manner, before the controller controls the relay F to be closed, that is, before the controller controls both the first switching transistor Q1 and the second switching transistor Q2 to be turned on, a fault in the drive circuit can be identified, and whether the drive circuit is abnormal can be detected, to improve control reliability of the relay. Specifically, the first auxiliary power supply V1 is connected to the other end A of the coil of the relay F, and the first auxiliary power supply V1 is configured to provide the first voltage V1 for the other end A of the coil of the relay. The first resistor R1 and the second resistor R2 are connected in series between the end of the coil of the relay F and the grounding circuit, and there is a sampling point B between the first resistor R1 and the second resistor R2.

In some embodiments of this application, the first resistor R1 and the second resistor R2 each may include at least one resistor. For example, the first resistor R1 and the second resistor R2 each include one 10 kΩ resistor or two 5 kΩ resistors connected in series. In some other embodiments of this application, the drive circuit may further include a component like a diode or an inductor that is connected in series to the first resistor R1 and the second resistor R2.

In some embodiments of this application, the first voltage V1 provided by the first auxiliary power supply V1 should be less than the second voltage V2 provided by the second auxiliary power supply V2/V3, to ensure that during fault identification, voltages that are at the sampling point B and that are obtained when the first switching transistor Q1 and the second switching transistor Q2 are controlled to be turned on in the time-division manner have different voltage values.

In some embodiments of this application, during fault identification, that is, before the controller controls both the first switching transistor Q1 and the second switching transistor Q2 to be turned on, the first auxiliary power supply V1 may continuously provide the first voltage V1, and the second auxiliary power supply V2 may continuously provide the second voltage V2. After the controller controls both the first switching transistor Q1 and the second switching transistor Q2 to be turned on, to make the relay F closed, the first auxiliary power supply V1 may stop providing the first voltage V1, to reduce power consumption, or the first auxiliary power supply V1 may continuously provide the first voltage V1, and the second auxiliary power supply V2/V3 continuously provides the third voltage V3, to keep the relay F closed.

In some embodiments of this application, the drive circuit may further include a diode D. The diode D is connected in series between the first auxiliary power supply V1 and the other end A of the coil of the relay F, to prevent the second voltage V2 provided by the second auxiliary power supply V2/V3 from backfeeding to the first auxiliary power supply V1 when the first switching transistor Q1 is turned on. Specifically, an anode of the diode D is connected to the first auxiliary power supply V1, and a cathode of the diode D is connected to the other end A of the coil of the relay F.

In this application, before controlling both the first switching transistor Q1 and the second switching transistor Q2 to be turned on, the controller may control, according to the following logic, the first switching transistor Q1 and the second switching transistor Q2 to be turned on in a time-division manner, sample a voltage at the sampling point B, and compare whether a sampled voltage V-sample meets a condition, to determine whether the drive circuit is abnormal.

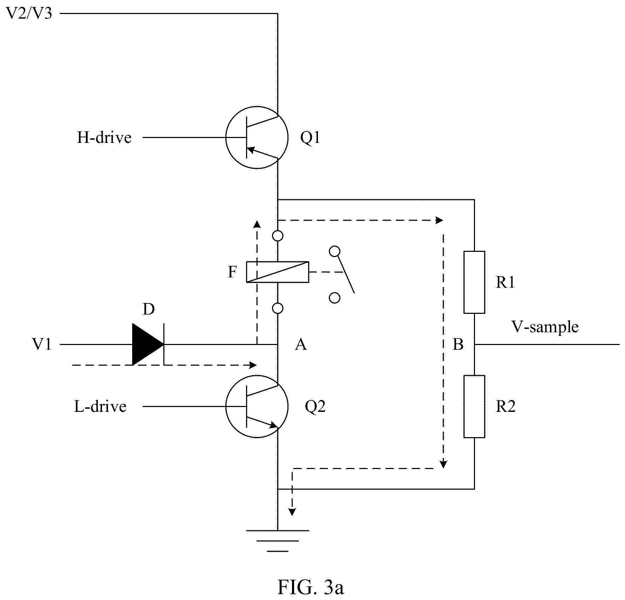

Refer to FIG. 3a. The controller controls both the first switching transistor Q1 and the second switching transistor Q2 to be in an off state, and the first voltage V1 provided by the first auxiliary power supply V1 flows through the diode D, the coil of the relay F, the first resistor R1, and the second resistor R2 to be connected to the grounding circuit, to form a current loop. In this case, if the sampled voltage V-sample is k times the first voltage, that is, kV1, k is greater than 0 and less than 1, and k=R1/(R1+R2), it indicates that no fault occurs.

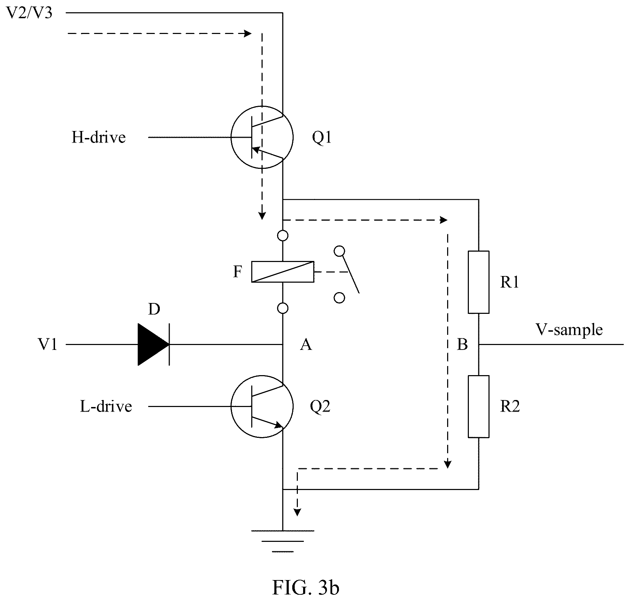

Refer to FIG. 3b. The controller controls the first switching transistor Q1 to be in an on state and the second switching transistor Q2 to be in the off state. Because the second voltage V2 is higher than the first voltage V1, and the diode D is reversely cut off, the second voltage V2 provided by the second auxiliary power supply V2/V3 flows through the first switching transistor Q1, the first resistor R1, and the second resistor R2 to be connected to the grounding circuit, to form a current loop. In this case, if the sampled voltage V-sample is k times the second voltage, that is, kV2, k is greater than 0 and less than 1, and k=R1/(R1+R2), it indicates that no fault occurs.

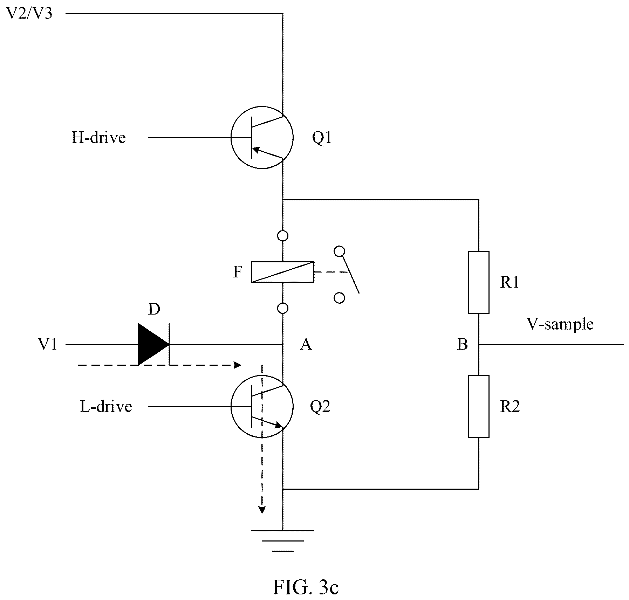

Refer to FIG. 3c. The controller controls the first switching transistor Q1 to be in the off state and the second switching transistor Q2 to be in the on state, the first voltage V1 provided by the first auxiliary power supply V1 flows through the diode D and the second switching transistor Q2 to be connected to the grounding circuit, to form a current loop. In this case, if the sampled voltage V-sample is 0, it indicates that no fault occurs.

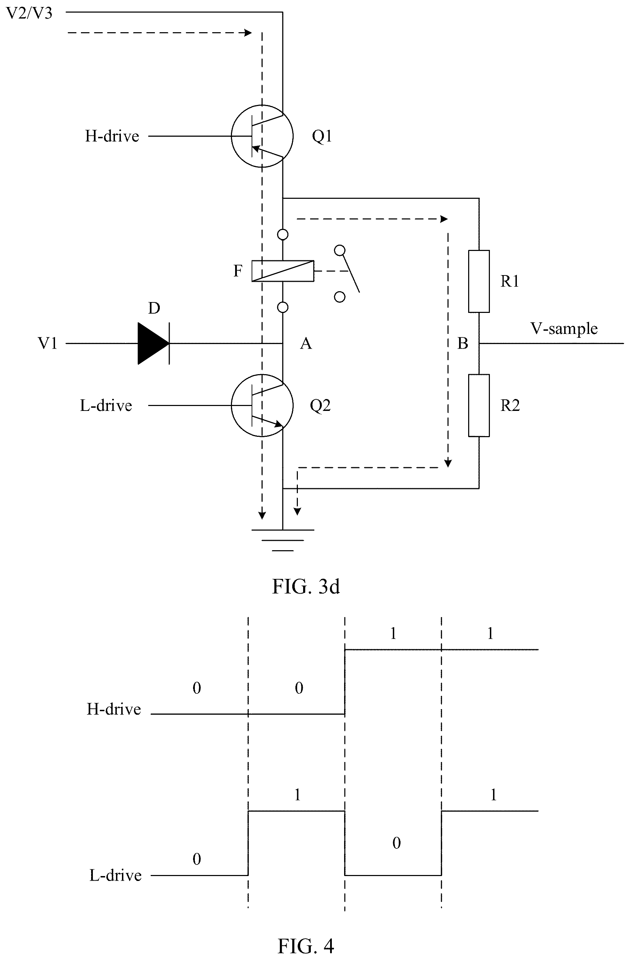

After the first switching transistor Q1 and the second switching transistor Q2 are turned on in the time-sharing manner according to the foregoing control logic, and the sampled voltages are determined, if the sampled voltages meet a requirement, the controller controls the first switching transistor Q1 and the second switching transistor Q2 to be in the on state, to make the relay F closed. Refer to FIG. 3d. After the relay F is closed, the first voltage V1 provided by the first auxiliary power supply V1 flows through the diode D and the second switching transistor Q2 to be connected to the grounding circuit, to form a current loop. The third voltage V3 provided by the second auxiliary power supply V2/V3 flows through the first switching transistor Q1, the first resistor R1, and the second resistor R2 to be connected to the grounding circuit, to form a current loop. In this case, whether the drive circuit of the relay F is faulty may be continuously monitored by using the sampling point, to be specific, if the sampled voltage V-sample is k times the third voltage, that is, kV3, k is greater than 0 and less than 1, and k=R1/(R1+R2), it indicates that no fault occurs.

In this application, the fault in the drive circuit is identified in the foregoing manner, and whether the drive circuit is abnormal is detected, so that control reliability of the relay F can be improved. During fault detection, the following truth table may be established. Refer to FIG. 4. A drive signal H-drive applied to the first switching transistor Q1 and a drive signal L-drive applied to the second switching transistor Q2 are controlled according to a sequence in the truth table, and whether sampled voltages V-sample match values recorded in the truth table is checked, to determine whether the drive circuit is normal. Herein, 0 represents a turn-off signal, and 1 represents a turn-on signal. During specific implementation, a sequence in which the first switching transistor Q1 and the second switching transistor Q3 are turned on in the time-division manner may be adjusted, that is, a sequence of first three rows in the truth table may be adjusted.

**Truth table**

| H-drive | L-drive | V-sample |
|---|---|---|
| 0 | 0 | V1*R1/(R1+R2) |
| 0 | 1 | 0 |
| 1 | 0 | V2*R1/(R1+R2) |
| 1 | 1 | V3*R1/(R1+R2) |

In some embodiments, the drive circuit provided in this application may be applied to another scenario having a relay, for example, an on-grid/off-grid controller, a vehicle-mounted device, a smart meter, or a photovoltaic inverter.

Based on a same inventive concept, an embodiment of this application further provides a photovoltaic power generation system, including the foregoing backup power box provided in embodiments of this application and an inverter. The second port of the backup power box is connected to the inverter, and the first port of the backup power box is connected to a power supply.

Based on a same inventive concept, an embodiment of this application further provides a method for driving a backup power box, including:
controlling both a first switching transistor and a second switching transistor to be in an off state, where a voltage at a sampling point is k times a first voltage provided by a first auxiliary power supply, and k is greater than 0 and less than 1; controlling the first switching transistor to be in an on state and the second switching transistor to be in the off state, where the voltage at the sampling point is k times a second voltage provided by a second auxiliary power supply; and controlling the first switching transistor to be in the off state and the second switching transistor to be in the on state, where the voltage at the sampling point is zero. After all the foregoing conditions are met, the first switching transistor and the second switching transistor are controlled to be turned on, to make the relay closed.

In this application, according to the foregoing logic, the first switching transistor and the second switching transistor are turned on in a time-division manner, voltage sampling is performed at the sampling point, and whether a condition is met is determined, so that before the controller controls the relay to be closed, a fault in a drive circuit is identified, and whether the drive circuit is abnormal is detected, to improve control reliability of the relay.

In some embodiments of this application, k=R1/(R1+R2), R1 is a resistance value of a first resistor, and R2 is a resistance value of a second resistor.

In some embodiments of this application, the first voltage provided by the first auxiliary power supply should be less than the second voltage provided by the second auxiliary power supply, to ensure that during fault identification, voltages that are at the sampling point and that are obtained when the first switching transistor and the second switching transistor are controlled to be turned on in the time-division manner have different voltage values.

In some embodiments of this application, during fault identification, that is, before the controller controls both the first switching transistor and the second switching transistor to be turned on, the first auxiliary power supply may continuously provide the first voltage, and the second auxiliary power supply may continuously provide the second voltage. After the controller controls both the first switching transistor and the second switching transistor to be turned on, to make the relay closed, the first auxiliary power supply may stop providing the first voltage, to reduce power consumption, or the first auxiliary power supply may continuously provide the first voltage.

In some embodiments of this application, to reduce a loss of a coil after the relay is closed, after the controller controls the relay to be stably closed, the second auxiliary power supply may reduce an output voltage, that is, switch from providing the second voltage to providing a third voltage. The third voltage is less than the second voltage and greater than the first voltage. The second auxiliary power supply provides a high voltage for closing contacts of the relay. After the relay is closed, the second auxiliary power supply provides a low voltage for keeping the relay in a closed state, to reduce the loss of the coil of the relay.

This application provides the backup power box and the driving method thereof, and the photovoltaic power generation system. The drive circuit of the relay in the backup power box includes: the first switching transistor connected in series between the second auxiliary power supply and the end of the coil of the relay, the second switching transistor connected in series between the other end of the coil of the relay and the grounding circuit, the first auxiliary power supply connected to the other end of the coil of the relay, and the first resistor and the second resistor that are connected in series between the end of the coil of the relay and the grounding circuit. There is the sampling point between the first resistor and the second resistor. The controller turns on the first switching transistor and the second switching transistor in the time-division manner, performs voltage sampling at the sampling point, and determines whether the condition is met, so that before both the first switching transistor and the second switching transistor are controlled to be turned on, that is, the relay is controlled to be closed, the fault in the drive circuit is identified, and whether the drive circuit is abnormal is detected, to improve control reliability of the relay.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A backup power box, comprising a first port, a second port, a relay, and a drive circuit, wherein
the first port is configured to connect to a power supply, the second port is configured to connect to an inverter, the relay is connected in series between the first port and the second port, and the drive circuit is configured to drive the relay to be closed or open;
the drive circuit comprises: a first switching transistor, a second switching transistor, a first auxiliary power supply, a second auxiliary power supply, a first resistor, a second resistor, and a controller;
the first switching transistor is connected in series between the second auxiliary power supply and one end of a coil of the relay, and the second switching transistor is connected in series between the other end of the coil of the relay and a grounding circuit;
the first auxiliary power supply is connected to the other end of the coil of the relay;
the first resistor and the second resistor are connected in series between the end of the coil of the relay and the grounding circuit, and there is a sampling point between the first resistor and the second resistor;
the first auxiliary power supply is configured to provide a first voltage, and the second auxiliary power supply is configured to provide a second voltage; and
the controller is configured to: after the following conditions are met, control the first switching transistor and the second switching transistor to be turned on, to make the relay closed:
when both the first switching transistor and the second switching transistor are controlled to be in an off state, a voltage at the sampling point is k times the first voltage, wherein k is greater than 0 and less than 1;
when the first switching transistor is controlled to be in an on state and the second switching transistor is controlled to be in the off state, the voltage at the sampling point is k times the second voltage; and
when the first switching transistor is controlled to be in the off state and the second switching transistor is controlled to be in the on state, the voltage at the sampling point is zero.

2. The backup power box according to claim 1, wherein k=R1/(R1+R2), R1 is a resistance value of the first resistor, and R2 is a resistance value of the second resistor.

3. The backup power box according to claim 1 or 2, wherein the drive circuit further comprises a diode, and the diode is connected in series between the first auxiliary power supply and the other end of the coil of the relay.

4. The backup power box according to any one of claims 1 to 3, wherein the first voltage is less than the second voltage.

5. The backup power box according to any one of claims 1 to 4, wherein before the controller controls the first switching transistor and the second switching transistor to be turned on, the first auxiliary power supply is configured to provide the first voltage, and the second auxiliary power supply is configured to provide the second voltage; and after the relay is closed, the second auxiliary power supply is configured to provide a third voltage, wherein the third voltage is less than the second voltage, and the third voltage is greater than the first voltage.

6. A photovoltaic power generation system, comprising the backup power box according to any one of claims 1 to 5 and an inverter, wherein the second port of the backup power box is connected to the inverter.

7. A method for driving a backup power box, comprising: after the following conditions are met, controlling a first switching transistor and a second switching transistor to be turned on, to make a relay closed, wherein the first switching transistor is connected in series between a second auxiliary power supply and one end of a coil of the relay, the second switching transistor is connected in series between the other end of the coil of the relay and a grounding circuit, the first auxiliary power supply is connected to the other end of the coil of the relay, and there is a sampling point between a first resistor and a second resistor that are connected in series between the end of the coil of the relay and the grounding circuit:
when both the first switching transistor and the second switching transistor are controlled to be in an off state, a voltage at the sampling point is k times a first voltage, wherein k is greater than 0 and less than 1;
when the first switching transistor is controlled to be in an on state and the second switching transistor is controlled to be in the off state, the voltage at the sampling point is k times the second voltage; and
when the first switching transistor is controlled to be in the off state and the second switching transistor is controlled to be in the on state, the voltage at the sampling point is zero.

8. The driving method according to claim 7, wherein k=R1/(R1+R2), R1 is a resistance value of the first resistor, and R2 is a resistance value of the second resistor.

9. The driving method according to claim 7 or 8, wherein the first voltage provided by the first auxiliary power supply is less than the second voltage provided by the second auxiliary power supply.

10. The driving method according to any one of claims 7 to 9, further comprising:
before the first switching transistor and the second switching transistor are controlled to be turned on, providing, by the first auxiliary power supply, the first voltage, and providing, by the second auxiliary power supply, the second voltage; and
after the relay is closed, providing, by the second auxiliary power supply, a third voltage, wherein the third voltage is less than the second voltage, and the third voltage is greater than the first voltage.
